# EUROPEAN PATENT APPLICATION

(11) **EP 3 081 916 A1**
(43) Date of publication of application: **19.10.2016**
(21) Application number: 14869887.1
(22) Date of filing: 01.12.2014
(51) Int. Cl.: G01M 13/04

(54) **METHOD AND SYSTEM FOR INSPECTING ROTARY MACHINE COMPONENT BY USING PORTAL TERMINAL**

(30) Priority: 12.12.2013 JP 2013256659; 12.12.2013 JP 2013256889
(71) Applicant: NTN Corporation, Osaka-shi, Osaka 550-0003 (JP)
(72) Inventor: TAKADA, Seiichi, Kuwana-shi Mie 511-8678 (JP); ITOMI, Shoji, Kuwana-shi Mie 511-8678 (JP)
(74) Representative: Maikowski & Ninnemann Patentanwälte Partnerschaft mbB
(86) International application number: PCT/JP2014/081755
(87) International publication number: WO 2015/087732

(57) **Abstract**

An inspection method is provided which allows an operating state of a rotating machine component such as a bearing to be easily inspected by using a dedicated sensor and a portable information terminal. A general-purpose portable information terminal (2), and a dedicated sensor (3) connected thereto are used. Detection data detected by the dedicated sensor (3) is transmitted from the terminal (2) to a server (6), and the server (6) performs data processing and transmits a processing result to the terminal (2). The terminal (2) displays the result on a screen (21a). A detection time period during which the detection data supplied by the dedicated sensor (3) has been detected at one time is less than one rotation of a rotating machine component (1). It is possible for an operator to determine a malfunction in the component (1) on the basis of a plurality of results.

## Description

### CROSS REFERENCE TO THE RELATED APPLICATION

This application is based on and claims Convention priority to Japanese patent application Nos. 2013-256659 and 2013-256889, filed December 12, 2013, the entire disclosures of which are herein incorporated by reference as a part of this application.

### BACKGROUND OF THE INVENTION

### (Field of the Invention)

The present invention relates to a portable-terminal-using inspection system and method, for a rotating machine component which is a machine component including a rolling element such as a rolling bearing, a constant velocity ball joint, or the like, for inspecting an operating state of the rotating machine component by using a popularized portable information terminal (mobile information terminal) such as a smartphone or the like.

### (Description of Related Art)

As a method for inspecting a rotating machine component such as a bearing or the like, there is a method in which vibration or the temperature of the rotating machine component such as a bearing or the like is measured and a state thereof is displayed or inspected (e.g., Patent Documents 1 and 2).

However, the conventional inspection method disclosed in Patent Document 1 or Patent Document 2 requires a display device or a processing device dedicated for inspection, the devices are large in size and expensive, and thus there is the problem that it is generally difficult to use the method.

As a bearing vibration diagnosis apparatus that solves such a problem, a system is conceived in which vibration analysis is performed by a server, and a measuring person carries only a dedicated sensor such as a vibration pickup or the like, a portable information terminal, such as a smartphone or the like, which sends detection data of the vibration pickup to the server, and an A/D converter which sends the data of the vibration pickup to a portable information terminal (Patent Document 3). The vibration detection data of the vibration pickup is sent from the portable information terminal and is analyzed by the server. The result of the analysis is sent back to the portable information terminal and displayed. Thus, the measuring person does not need a personal computer or the like for analyzing vibration, so that analysis is enabled at low cost. In the communication by the portable information terminal such as a smartphone or the like, a communication function such as the Internet is normally available, in particular wireless mobile communication is used.

### [Related Document]

### [Patent Document]

[Patent Document 1] JP Examined Utility Model Publication No. H05-17625
[Patent Document 2] JP Patent No. 2954183
[Patent Document 3] JP Laid-Open Patent Publication No. 2013-228352

### SUMMARY OF THE INVENTION

However, in the case where data is transmitted by using the communication function such as the Internet and vibration of the bearing or the like is inspected by the server as described above, if the volume of the data is large, a long time is taken for communication, and the communication can be cut off depending on the communication condition.

An object of the present invention is to provide a portable-terminal-using inspection system and method, for a rotating machine component such as a bearing or the like, which allow an operating state of the rotating machine component to be easily inspected by using a popularized portable information terminal and a dedicated sensor that supplies detection data to the portable information terminal. A possibility is reduced that detection data is damaged due to a communication failure during communication from the portable terminal to a server. The system and method also allow processing, such as malfunction diagnosis through inspection equivalent to inspection of the entire periphery of the rotating machine component, to be performed.

Hereinafter, for convenience of easy understanding, a description will be given with reference to the reference numerals in embodiments.

A portable-terminal-using inspection system for a rotating machine component according to one aspect of the present invention is directed to a system for inspecting a rotating machine component 1. The system includes: a dedicated sensor configured to detect a state of the rotating machine component 1; at least one general-purpose portable information terminal 2 to which detection data regarding the state detected by the dedicated sensor is supplied; and a server 6 connected to the at least one portable information terminal 2 via a communication line network.

The at least one portable information terminal 2 is configured to transmit the detection data supplied from the dedicated sensor 3, to the server 6, and display, on a screen 21a, a processing result that is obtained by data processing with the server 6 and transmitted from the server 6. A detection time period during which the detection data supplied by the dedicated sensor 3 has been detected at one time is less than one rotation period of the rotating machine component 1 that is a detection target. The detection data which has been detected at one time is transmitted to the server at one time.

The server 6 includes a piece of data processing software 4 and a database 15 having stored therein pieces of specification data 5 each associated with a respective model number of the rotating machine component 1, and the piece of data processing software 4 has a procedure of performing data processing by using the pieces of specification data and the detection data transmitted from the at least one portable information terminal 2, and transmitting the processing result to the at least one portable information terminal 2.

The transmission of the detection data to the server 6 by the at least one portable information terminal 2, and the data processing and the transmission of the processing result to the at least one portable information terminal 2 by the server 6 are repeated a plurality of times.

One rotation period for determining the period of "less than one rotation period of the rotating machine component 1" is determined on the basis of a rotational frequency, which corresponds to a rotational speed, at inspection if the rotational frequency is known, and is regarded as a standard time period of one rotation corresponding to the form of use of the rotating machine component 1 if the rotational frequency is unknown. The time period of less than one rotation may be determined based on to any criteria using the one rotation period. In particular, the time period of less than one rotation may be configured at a time period having a predetermined ratio relative to the one rotation period. The predetermined ratio may be configured at any value. The predetermined ratio may vary with different times of detection.

In the present specification, the "rotating machine component 1" refers to a machine component including a rolling element such as a rolling bearing, a constant velocity ball joint, or the like. The general-purpose portable information terminal 2 includes a smartphone, a tablet, or the like. The general-purpose portable information terminal 2 refers to an information processing apparatus that may do not necessarily have a telephone function but be connectable to the server 6 via a wide-area communication line network 7 such as a telephone network, the Internet, or the like and may have an OS (operation program) 9 that is able to download and install an application program. The dedicated sensor 3 includes, for example, a pickup for detecting vibration or a sensor 3 for detecting a temperature, and is connected to the portable information terminal 2 via a cable 8 having a terminal 8a that complies with the standard of a micro USB (one of the USB standards which are connection interface standards) or the like, a wireless LAN, or the like. Alternatively, the dedicated sensor 3 may be able to supply data to the portable information terminal 2 via an attachable/detachable storage medium such as a memory chip, a USB memory, or the like. In the case where the rotating machine component 1 includes a bearing, the model number of the rotating machine component 1 may be a number for the rotating machine component 1 determined for each specification, which is referred to as a bearing name or a bearing number (a bearing designation). Alternatively, the model number may be the number determined for each rotating machine component 1. In the case where the rotating machine component 1 includes a rolling bearing, the piece of specification data 5 associated therewith includes, for example, the number of balls, the ball diameter, the dimensions of an inner ring and an outer ring, and the like. For the data processing with the piece of data processing software 4, in addition to the pieces of specification data 5 and the detection data supplied from the dedicated sensor 3, data of a rotational speed or the like of the rotating machine component 1, such as a bearing, which is inputted from a manual input module 22 of the portable information terminal 2 may be used.

According to this configuration, by merely preparing the dedicated sensor 3, it is possible to easily inspect an operating state of the rotating machine component 1 by using the popularized portable information terminal 2 such as a smartphone, a tablet, or the like.

In addition, the detection time period during which data is detected by the dedicated sensor 3 to be transmitted at one time, that is, a time period in which measurement for inspection is continued, is the time period of less than one rotation of the rotating machine component 1 that is an inspection target. Thus, the data volume can be reduced. In particular, in inspection in which the volume of data of vibration detection or the like becomes large, the data volume can be reduced, so that each time period of transmission can be shortened. Therefore, a possibility is reduced that transmission is suspended due to a communication failure such as radio wave interference during the transmission, or detection data is damaged due to noise being superposed thereon. Since the inspection time period is less than one rotation, inspection of the entire periphery of the rotating machine component 1 in the circumferential direction that is a rotation direction of the rotating machine component 1 cannot be performed by inspection at one time. However, the inspection process including detection by the dedicated sensor 3, the data processing by the server 6, transmission of the processing result, and display on the screen 21a of the portable information terminal 2, is repeated a plurality of times. When the operator may perform malfunction determination on the rotating machine component 1 on the basis of information displayed on the screen 21a of the portable information terminal 2 at the plurality of times, inspection of the entire periphery can be generally performed.

Even if a range in the entire periphery of the rotating machine component 1 for which range detection is performed is not configured for detection at each time, since detection is performed a plurality of times, for example, several times, entire detection data for the entire periphery of the rotating machine component 1 can be generally obtained, so that inspection of the entire periphery can be generally performed. Note that in this case, there is a portion of the periphery that can be inspected more than once. Therefore, even when a malfunction has occurred in a part of the entire periphery of the rotating machine component 1, inspection of malfunction determination can be performed. The operator may aurally or visually feel a malfunction in the rotating machine component 1, but, with detection at several times, occurrence of the malfunction may not be displayed on the screen 21 a of the portable information terminal 2. In such a case, there is a possibility that a malfunction part of the entire periphery has not been inspected. Even so, it is only necessary to increase the number of times of repetition of detection. Accordingly, the malfunction part is inspected, the malfunction is detected, and occurrence of the malfunction is displayed on the screen 21 a.

In a preferred embodiment, the dedicated sensor 3 may include a sensor 3 for detecting vibration or sound, and the detection data may include waveform data. The server 6 may perform frequency analysis of the waveform data and transmit, to the at least one portable information terminal 2, a result of presence/absence of a malfunction in each part of the rotating machine component 1, and the at least one portable information terminal 2 may display the result of presence/absence of a malfunction in each part, on the screen 21 a.

In the case where vibration or sound is detected and thus the detection data includes waveform data, the data volume of the detection data would be large. By shortening a detection time period during which the detection is performed, but increasing the number of times of detection, a possibility reduces that the detection data is damaged during communication. Therefore, an advantage of reducing a possibility that the detection data is damaged is effectively achieved. In addition, in the case where frequency analysis is performed and a result of presence/absence of a malfunction in each part of the rotating machine component 1 is displayed, details of a malfunction in the rotating machine component 1 (a part of the rotating machine component at which part the malfunction has occurred) is clearly recognized, and thus action against the rotating machine component 1 can be easily taken. The piece of data processing software 4, which performs such frequency analysis and determines presence/absence of a malfunction in each part of the rotating machine component 1, is complicated so that the amount of data processing is large. However, since the piece of data processing software 4 is stored in the server 6, high-speed processing can be performed unlike the case where processing is performed by a personal computer or the like.

In a preferred embodiment, the rotating machine component 1 may include a rolling bearing. In the case where the rotating machine component 1 includes a rolling bearing, the above respective advantages are more effectively achieved.

In a preferred embodiment, the detection time period is equal to or less than 1/4 of one rotation period of the rotating machine component.

In a preferred embodiment, a time obtained by multiplying the detection time period by the plurality of times is larger than one rotation period of the rotating machine component.

A inspection method according to one aspect of the present invention is directed to a method for inspecting a rotating machine component 1 by using a general-purpose portable information terminal 2. The method includes: (i) detecting a state of the rotating machine component 1 by a dedicated sensor 3; (ii) supplying detection data regarding the detected state from the dedicated sensor 3 to the portable information terminal 2, a detection time period during which the detection data supplied by the dedicated sensor 3 has been detected at one time being less than one rotation period of the rotating machine component 1 that is an inspection target; (iii) transmitting the detection data supplied to the portable information terminal 2, which has been detected at one time, from the portable information terminal 2 to the server 6 at one time; (iv) performing data processing with a piece of data processing software 4 stored in the server 6, using the detection data and pieces of specification data each associated with a respective model number of the rotating machine component 1; (v) transmitting a processing result that is a result of the data processing, from the server 6 to the portable information terminal 2; and (vi) displaying the processing result on a screen 21a of the portable information terminal 2. The above-mentioned (i) to (vi) are repeated a plurality of times, which allows an operator to perform malfunction determination of one time on the rotating machine component 1 on the basis of a plurality of processing results that have been displayed on the screen 21a of the portable information terminal 2.

In the inspection method as well, one rotation period for determining the period of "less than one rotation period of the rotating machine component 1" is determined on the basis of a rotational frequency, which corresponds to a rotational speed, at inspection if the rotational frequency is known, and is regarded as a standard time period of one rotation corresponding to the form of use of the rotating machine component 1 if the rotational frequency is unknown. The time period of less than one rotation may be determined based on any criteria using the one rotation period. In particular, the set time period may be configured at a time period having a predetermined ratio relative to the one rotation period. The predetermined ratio may be configured at any value. The predetermined ratio may vary with different times of detection.

According to the inspection method, the respective effects and advantages described above for the inspection system according to the one aspect are obtained.

In a preferred embodiment, the dedicated sensor 3 may include a sensor 3 for detecting vibration or sound, and the detection data includes waveform data. The above-mentioned (iv) may include performing frequency analysis of the waveform data, the above-mentioned (v) may include transmitting a result of presence/absence of a malfunction in each part of the rotating machine component 1, as the processing result, to the portable information terminal 2, and the above-mentioned (vi) may include displaying, the portable information terminal 2, the result of presence/absence of a malfunction in each part, on the screen 21a.

In a preferred embodiment, the rotating machine component 1 may include a rolling bearing.

In the case of this configuration, the respective effects and advantages described above for the inspection system according to the one aspect are obtained.

A portable-terminal-using inspection system according to another aspect of the present invention is directed to a portable-terminal-using inspection system for inspecting an inspection target. The portable-terminal-using inspection system includes: a vibration sensor 3 configured to detect acceleration of vibration of the inspection target 1; at least one general-purpose portable information terminal 2 to which acceleration data regarding the acceleration detected by the vibration sensor 3 is supplied; and a server 6A connected to the at least one portable information terminal 2 via a communication line network 7.

The at least one portable information terminal 2 includes: a detection data transmission module 35 configured to transmit detection data including the acceleration data detected by the vibration sensor 3, to the server 6A; and a processing result display module 36 configured to display a processing result sent back from the server 6A with respect to the transmitted detection data.

The server 6A includes: a reception processing module 13 configured to receive the acceleration data included in the detection data transmitted from the at least one portable information terminal 2; a data processing module 40 configured to process the received detection data; and a processing result sending-back module 34 configured to send a processing result of the data processing module 40 back to the at least one portable information terminal 2. The data processing module 40 includes: a speed calculation section 4b configured to integrate the acceleration data in the detection data, to obtain a speed; and a displacement calculation section 4c configured to integrate the speed obtained by the speed calculation section 4b, to obtain a displacement.

According to this configuration, the data processing module 40 provided in the server 6A includes: the speed calculation section 4b configured to integrate the acceleration data in the detection data, to obtain a speed; and the displacement calculation section 4c configured to integrate the speed obtained by the speed calculation section 4b, to obtain a displacement. Thus, the speed and the displacement can be obtained by using a piece of software stored in the server 6A, without using a vibration sensor having a dedicated IC.

In addition, the general-purpose portable information terminal 2 is used to read detection data of the vibration sensor 3 and to transmit the detection data to the server 6A for causing the server 6A to process the detection data, and is also used to display a processing result transmitted from the server 6A. Thus, by merely preparing the dedicated sensor 3, it is possible to obtain the speed and the displacement of vibration by using the popularized portable information terminal 2 such as a smartphone, a tablet, or the like.

If the processing result sending-back module 34 of the server 6A is configured to send the speed and the displacement of vibration obtained by the data processing module 40, back to the portable information terminal 2, it is possible to obtain not only the acceleration of vibration but also the speed and the displacement of vibration at the site of vibration measurement, by connecting the portable information terminal 2 while using the vibration sensor 3 having no IC dedicated for calculation, similarly to the case of using a vibration sensor that has a dedicated IC.

The general-purpose portable information terminal 2 includes a smartphone, a tablet, or the like. The general-purpose portable information terminal 2 refers to an information processing apparatus that may do not necessarily have a telephone function but be connectable to the server 6 via a wide-area communication line network 7 such as a telephone network, the Internet, or the like and has an OS (operation program) 9 that is able to download and install an application program. The vibration sensor 3 includes, for example, a vibration pickup, and is connected to the portable information terminal 2 via a cable 8 having a terminal 8a that complies with the standard of a micro USB (one of the USB standards which are connection interface standards) or the like, a wireless LAN, or the like. Alternatively, the vibration sensor 3 may be able to supply data to the portable information terminal 2 via an attachable/detachable storage medium such as a memory chip, a USB memory, or the like.

In a preferred embodiment, the data processing module 40 of the server 6A may include, at a stage prior to the speed calculation section 4b, a low-frequency component cutting section 4a configured to cut off a low-frequency component from the acceleration data that is the detection data.

By cutting off the low-frequency component from the acceleration data, the integration for the speed and the displacement can be performed from the acceleration without occurrence of divergence. Therefore, calculation of the speed and the displacement can be assuredly performed.

The low-frequency component cutting section 4a is configured, for example, to perform frequency analysis of the acceleration data in the detection data, to eliminate a low-frequency component from a result of the frequency analysis, and to convert the low-frequency-eliminated frequency analysis result into second time-based acceleration data. Accordingly, the low-frequency component can be assuredly and appropriately cut off.

The low-frequency component cutting section 4a may be a low-cut filter. In this case, the low-frequency component cutting section 4a only needs to be configured with a simple configuration.

In a preferred embodiment, the data processing module 40 of the server 6A may include at least one of: an acceleration effective value calculation section 4d configured to calculate an effective value of the acceleration from the acceleration data; a speed effective value calculation section 4e configured to calculate an effective value of the speed from the speed obtained by the speed calculation section 4b; and a displacement effective value calculation section 4f configured to calculate an effective value of the displacement from the displacement obtained by the displacement calculation section 4c, and the processing result sending-back module 34 may send any one effective value among the effective values calculated by the acceleration effective value calculation section 4d, the speed effective value calculation section 4e and the displacement effective value calculation section 4f, respectively, the speed obtained by the speed calculation section 4b, and the displacement obtained by the displacement calculation section 4c, as the processing result, back to the at least one portable information terminal 2.

In the case of this configuration, at the portable information terminal 2 connected to the vibration sensor 3, it is possible to obtain the speed of vibration and the speed of a displacement, and it is further possible to obtain an effective value of acceleration of vibration, an effective value of a speed, and an effective value of a displacement. These effective values are data required for accurately performing malfunction diagnosis on the inspection target such as a rotating machine component, and it is possible to obtain these various data by merely using the simple vibration sensor 3 and the portable information terminal 2.

In a preferred embodiment, the inspection target 1 may include a rotating machine component. If the inspection target 1 is a rotating machine component, particularly a rolling bearing or the like, when malfunction determination and the like are performed, obtaining not only the detection data of the acceleration of vibration but also the speed and the displacement of vibration and performing determination lead to more accurate malfunction determination. Therefore, advantages are more effectively exerted that the speed and the displacement of vibration can be obtained easily by the system of the present invention.

A server 6A for a portable-terminal-using vibration inspection system according to one aspect of the present invention is directed to a server included in a portable-terminal-using vibration inspection system for inspecting an inspection target. The portable-terminal-using inspection system includes, in addition to the server 6A, a vibration sensor 3 configured to detect acceleration of vibration of the inspection target, and at least one general-purpose portable information terminal 2 to which acceleration data regarding the acceleration detected by the vibration sensor 3 is supplied. The server 6A is connected to the at least one portable information terminal 2 via a communication line network.

The server 6A includes: a reception processing module 13 configured to receive the acceleration data included in detection data transmitted from the at least one portable information terminal 2; a data processing module 40 configured to process the received detection data; and a processing result sending-back module 34 configured to send a processing result of the data processing module 40 back to the at least one portable information terminal 2, and the data processing module 40 includes: a low-frequency component cutting section 4a configure to cut off a low-frequency component from the acceleration data in the detection data; a speed calculation section 4b configured to integrate the acceleration data from which the low-frequency component has been cut off, to obtain a speed; and a displacement calculation section 4c configured to integrate the speed obtained by the speed calculation section 4b, to obtain a displacement.

According to the server 6 having this configuration, similarly as described for the portable-terminal-using vibration inspection system of the present invention, the speed and the displacement can be easily obtained from the detection data of the detected vibration acceleration by using the vibration sensor 3 having no IC dedicated for calculation.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a diagram illustrating a portable terminal-using inspection system for a rotating machine component according to a first embodiment of the present invention and includes a perspective view of a portable terminal and a dedicated sensor, a front view of the rotating machine component, and a block diagram of a server;
Fig. 2 is a block diagram of a schematic configuration of the inspection system in Fig. 1;
Fig. 3 is a flowchart of an inspection method by the inspection system in Fig. 1;
Fig. 4 is a diagram illustrating a portable-terminal-using vibration inspection system according to a second embodiment of the present invention and includes a perspective view of a portable terminal and a dedicated sensor, a front view of a rotating machine component, and a block diagram of a server;
Fig. 5 is a diagram illustrating a state where a speed, a displacement, effective values, and the like are obtained by the inspection system in Fig. 4; and
Fig. 6 is a block diagram of a schematic configuration of a portable-terminal-using vibration inspection system according to a third embodiment of the present invention.

### DESCRIPTION OF EMBODIMENTS

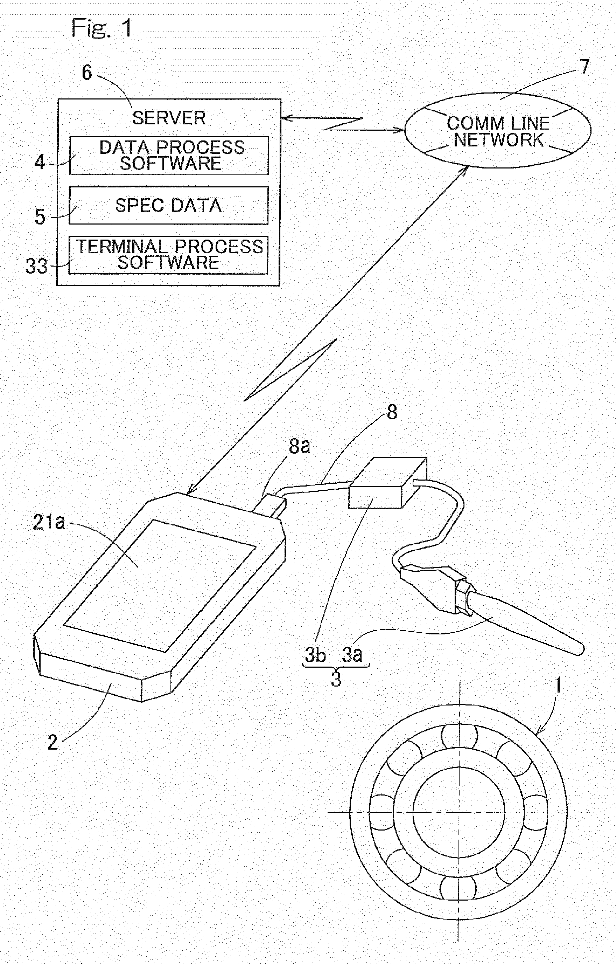

A portable-terminal-using inspection method according to a first embodiment of the present invention will be described with reference to Figs. 1 to 3. The portable terminal-using inspection method is directed to a method for inspecting a malfunction of a rotating machine component 1. In the method, a general-purpose portable information terminal 2 such as a smartphone or the like, a dedicated sensor 3 connected to the portable information terminal 2, and a server 6 connected to the portable information terminal 2 via a communication line network 7 such as the Internet, are used. The server 6 is provided with a piece of data processing software 4 and a database 15 having stored therein data of specifications or the like (data regarding specifications) 5 associated with the rotating machine component 1. The server 6 may be special to the portable-terminal-using inspection method for the rotating machine component, or may have a function to distribute various application programs and data that are independent of the portable terminal-using inspection method for the rotating machine component.

The rotating machine component 1 may include a rolling element such as a rolling bearing, a constant velocity ball joint, or the like. Specific examples of the rotating machine component 1 include bearings used in a continuous casting facility, and bearings used in playing equipment in an amusement park. The portable information terminal 2 may be a smartphone, a tablet, or the like, and may not necessarily have a telephone function, but is an information processing apparatus that is connectable to the server 6 via a wide-area communication line network 7 such as a telephone network, the Internet, or the like and has an OS (operation program) 9 that is able to download and install an application program. With respect to the above definition of the portable information terminal 2, the smartphone refers to a portable information terminal having a telephone function. The communication line network 7 is a line network through which mobile communication can be performed.

The dedicated sensor 3 includes, for example, a sensor for detecting vibration or sound. In this example, the dedicated sensor 3 includes a pickup for detecting vibration. The dedicated sensor 3 is insertion-connected to the portable information terminal 2 via a cable 8 having a terminal 8a that complies with the standard of a micro USB (one of the USB standards which are connection interface standards) or the like. Alternatively, the dedicated sensor 3 may be connected to the portable information terminal 2 via a wireless LAN or the like, or may allow an attachable/detachable storage medium (not shown) such as a memory chip, a USB memory, or the like to be attached thereto and detached therefrom and may be able to supply data to the portable information terminal 2 via the storage medium.

The dedicated sensor 3 in this embodiment includes: a sensor body 3a including the pickup for detecting vibration; and an A/D converter 3b. Data of a vibration waveform of an analog signal that is detected by the sensor body 3a may be outputted as a voltage value to be converted to digital data by the A/D converter 3b. Then, the converted digital data is captured in the portable information terminal 2. The A/D converter 3b may be located within a housing in which the sensor body 3a is provided.

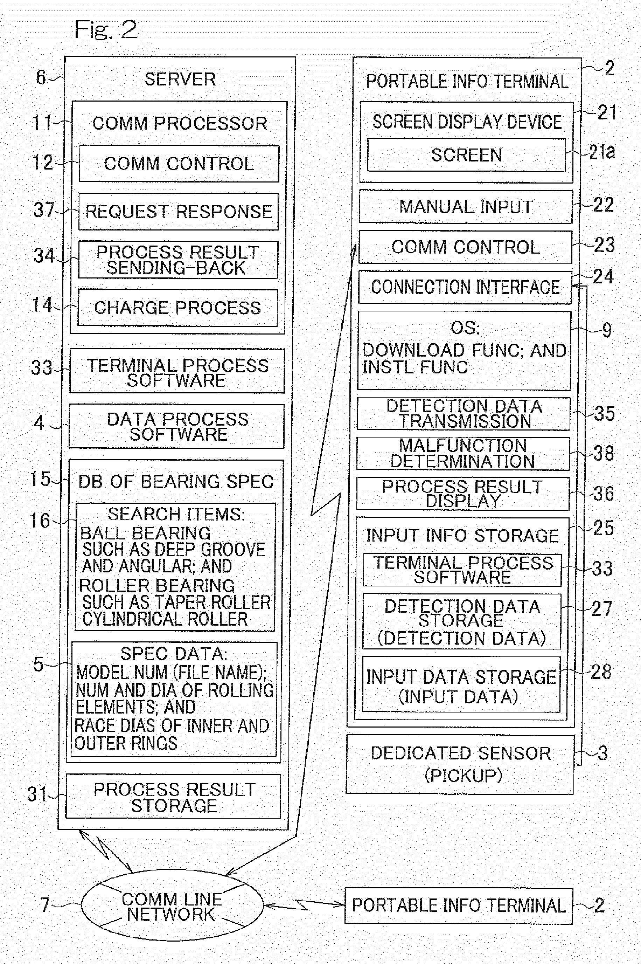

As shown in Fig. 2, the server 6 includes: a communication processor 11; a storage (not shown) having stored therein the piece of data processing software 4; a storage (not shown) having stored therein a piece of terminal processing software 33; the database 15 for the specifications of the respective rotating machine components 1 such as a bearing; and a processing result storage 31.

The communication processor (i.e. a processor for communication, etc.) 11 includes a communication control module 12, a request response module 37, a processing result sending-back module 34, and a charging processing module 14. The communication control module 12 is configured to respond to access from the portable information terminal 2 via the communication line network 7, establish communication therewith, and perform various controls regarding the communication. The request response module 37 is configured to cause data processing with the data processing software 4 to be performed in response to a request for data processing from the portable information terminal 2, and transmits the piece of terminal processing software 33 to the portable information terminal 2. The processing result sending-back module 34 is configured to send the result of the processing with the data processing software 4, back to the portable information terminal 2. The charging processing module 14 is configured to charge for the processing with the piece of data processing software 4 from the portable information terminal 2. The method for charging may be a method of charging for each use of the piece of data processing software 4, a method of changing a fixed fee, or a method of charging for download of the piece of terminal processing software 33.

The piece of data processing software 4 includes a program and data for causing the server 6 to perform data processing for inspecting the rotating machine component 1. In particular, the piece includes an application program to be executed on an OS (operation program) of the server 6. The piece of data processing software 4 is configured to, for example, perform frequency analysis (FFT analysis) of bearing vibration data and detect a vibration level of the vibration frequency of each part (e.g., an inner ring, an outer ring, a rolling element, a retainer) of the bearing on the basis of the FFT analysis result. The piece of data processing software 4 compares these detected vibration levels to respective thresholds. In a part at which the vibration level exceeds the threshold, it is determined that a malfunction has occurred. The piece of data processing software 4 has a function to cause the following processing to be performed via the processing result sending-back module 34. In the processing, if the piece of data processing software 4 determines that a malfunction has occurred in at least one part, the piece of data processing software 4 displays that the malfunction has occurred, on a screen 21 a of the portable information terminal 2; and if all the detected vibration levels are less than the thresholds, the piece of data processing software 4 determines that no malfunction has occurred, and displays that no malfunction has occurred, on the screen 21 a.

In performing the malfunction determination, the piece of data processing software 4 may determine that a malfunction has occurred, if a condition determined on the basis of comparison of time-sequential processing results is met even when the vibration level is equal to or less than the threshold, and may display the determination result on the screen 21a of the portable information terminal 2.

The database 15 includes: a database management system (not shown) that is searchable through access from the portable information terminal 2; and a data storage. In the case where the rotating machine component 1 is a bearing, the database 15 stores types of bearings hierarchically classifying the bearing as a search item 16. The search item 16 is classified into: a level classified into ball bearing and roller bearing in which ball bearing is classified into deep groove ball bearing, angular contact ball bearing, and other types of bearings, and roller bearing is classified into taper roller bearing, cylindrical roller bearing, and other types of bearings; a level classified by size; and a level classified by presence/absence of a seal and a seal type. The search item 16 may have a plurality of types of levels having different forms of classification. A piece of specification data 5 associated with one model number in the lowest level is provided as a file. The database 15 allows a plurality of pieces of specification data 5 to be extracted as a folder with various levels.

In the case where the rotating machine component is a rolling bearing, the piece of specification data 5 associated therewith includes, for example, the number of balls, the ball diameter, the dimensions of an inner ring and an outer ring, and the like. A model number of the rotating machine component 1 is a number for the rotating machine component that is determined for each specification associated with the rotating machine component 1, or a number determined for each rotating machine component. In the case where the rotating machine component 1 is a bearing, the model number may be the number referred to a bearing name or a bearing number, or a production number is used as the model number.

The processing result storage 31 is configured to store the result of the processing with the piece of data processing software 4. The processing result storage 31 is provided, for example, as a database, and may be configured to also store the pieces of specification data 5 processed with the piece of data processing software 4, data obtained from the dedicated sensor 3, identification data of the portable information terminal 2, and the like. In addition, the piece of data processing software 4 may have a function to compare a plurality of the processing results, a function to cause the processing result to be stored in the processing result storage 31 of the server 6, and a function to search the processing result storage 31 with an appropriate search condition and download the stored processing result. By the portable information terminal 2, the plurality of the processing results may be compared using the above comparison function. By comparing the plurality of the processing results, it is possible to perform further appropriate inspection and evaluation of an inspection result.

The piece of terminal processing software 33 is used in the portable information terminal 2. For that purpose, the piece 33 is transmitted to the portable information terminal 2 by the request response module 37 in response to a transmission request from the portable information terminal 2.

Specifically, the piece of terminal processing software 33 is configured to: transmit the detection data that is detected by the dedicated sensor 3 and inputted to the portable information terminal 2, to the server 6; cause the server 6 to perform data processing; and the like. The piece of terminal processing software 33 is installed in the portable information terminal 2, that is, is made executable in the portable information terminal 2. Therefore, in the portable information terminal 2, a detection data transmission module 35, a processing result display module 36, and a malfunction determination module 38 are developed.

The configuration of the portable information terminal 2 will be specifically described. The portable information terminal 2 may be a smartphone, a tablet, or the like as described above, and includes the OS 9 that is able to download and install an application program, a screen display device 21, a manual input module 22, a communication control module 23, a connection interface 24, and an input information storage 25.

The screen display device 21 is configured to display an image on the screen 21 a such as a liquid crystal display. The manual input module 22 is a module in order for an operator to manually perform an input (an interface for an input by the operator), and includes a hardware keyboard for inputting characters and numbers, a software keyboard that enables an input to be performed by a finger, a touch pen, or the like touching the screen 21a, or the like. The communication control module 23 is configured to perform communication with the server 6 via the communication line network 7 and perform various processing. The connection interface 24 is configured to connect the portable information terminal 2 to another apparatus. In this example, the connection interface 24 is includes an insertion-connection terminal complying with the micro USB standard, and a circuit and a piece of software for input/output processing thereof.

The input information storage 25 is configured to store detection data of the dedicated sensor 3 inputted via the server 6, the manual input module 22, or the connection interface 24. The piece of data processing software 4 is inputted and installed in the input information storage 25 so as to be executable. The pieces of specification data 5 downloaded from the server 6 is stored in the input information storage 25 as a specification data group 26 including a folder with a hierarchical structure. The detection data obtained from the dedicated sensor 3 is stored in a detection data storage section 27 of the input information storage 25, and various data inputted from the manual input module 22, such as a bearing rotational speed or the like, is stored in an input data storage section 28.

When the piece of terminal processing software 33 is installed into the portable information terminal 2, the detection data transmission module 35, the malfunction determination module 38, and the processing result display module 36 are developed.

The detection data transmission module 35 is configured to transmit, to the server 6, detection data that is detected by the dedicated sensor 3 and captured by the portable information terminal 2. When detection start is instructed through, for example, an operation of the manual input module 22 of the portable information terminal 2 or the like, the detection data transmission module 35 captures the detection data of the dedicated sensor 3 for a set time period, and transmits the captured detection data as a block of data to be transmitted at one time, to the server 6. The set time period is less than one rotation period of the rotating machine component 1 that is a detection target. If a rotational frequency, which corresponds to a rotational speed, at inspection is known, the one rotation period of the rotating machine component 1 is determined on the basis of the rotational frequency. If a rotational frequency, which corresponds to a rotational speed, at inspection is unknown, the one rotation period of the rotating machine component 1 is regarded as a standard time period of one rotation corresponding to the form of use of the rotating machine component 1. The set time period may be determined according to any criteria using the one rotation period. In particular, the set time period may be configured at a time period having a predetermined ratio relative to the one rotation period. The predetermined ratio may be configured at any value. The predetermined ratio may vary with different time of detection. For example, a time period of 1/4 rotation or less is set as the set time period.

Instead of determining the set time period as a detection time period, for example, only while an ON operation is continued with the manual input module 22, the detection data transmission module 35 may continue detection, and a detection time may be changed freely by an operator. Alternatively, a mode in which detection is continued only while the ON operation is continued, and a mode in which detection is continued only for the set time period as described, may be switchable by an operation of the manual input module 22 or the like. In the detection data transmission module 35, in the case where a rotational frequency is known, the set time period may be determined according to a setting rule when the type or the form of use of the rotating machine component 1 is inputted.

The inspection method using the inspection system of this embodiment will be described. First, as a preparing process, the portable information terminal 2 requests the server 6 to transmit the piece of terminal processing software 33 thereto. In response to the transmission request, the server 6 transmits the piece of terminal processing software 33 to the portable information terminal 2. The portable information terminal 2 installs the downloaded piece of terminal processing software 33 to make the piece of terminal processing software 33 executable.

In inspection, detection data inputted from the dedicated sensor 3 to the portable information terminal 2, the model number of the rotating machine component 1 inputted from the manual input module 22 or the like, and data of a rotational frequency, which corresponds to a rotational speed, at inspection in the rotating machine component 1 which is obtained by the dedicated sensor 3 are transmitted from the portable information terminal 2 to the server 6. The data of the rotational frequency may be inputted from the manual input module 22, or may be data obtained from a rotation detector (not shown).

The server 6 processes the received detection data with the piece of data processing software 4 using the pieces of specification data 5 each associated with a respective model number and the rotational frequency, and sends the processing result back to the portable information terminal 2 by the processing result sending-back module 34. At this time, for example, the server 6 determines presence/absence of a malfunction in each part of the rotating machine component 1 (an inner ring, an outer ring, a rolling element, a retainer, etc. in the case of a rolling bearing), and sends back the result of presence/absence of a malfunction in each part, as a processing result. The portable information terminal 2 displays the sent-back processing result on the screen 21a. For example, the processing result is displayed by using characters, a pictogram, or a symbol representing each part such as the inner ring, the outer ring, the rolling element, and the retainer, and characters, a pictogram, or a symbol notifying presence/absence of a malfunction. In a specific example, "inner ring: 'A', outer ring: 'A', rolling element: 'A', and retainer: 'B'" is displayed. Note that "A" and "B" indicate "succeed" and "fail", respectively.

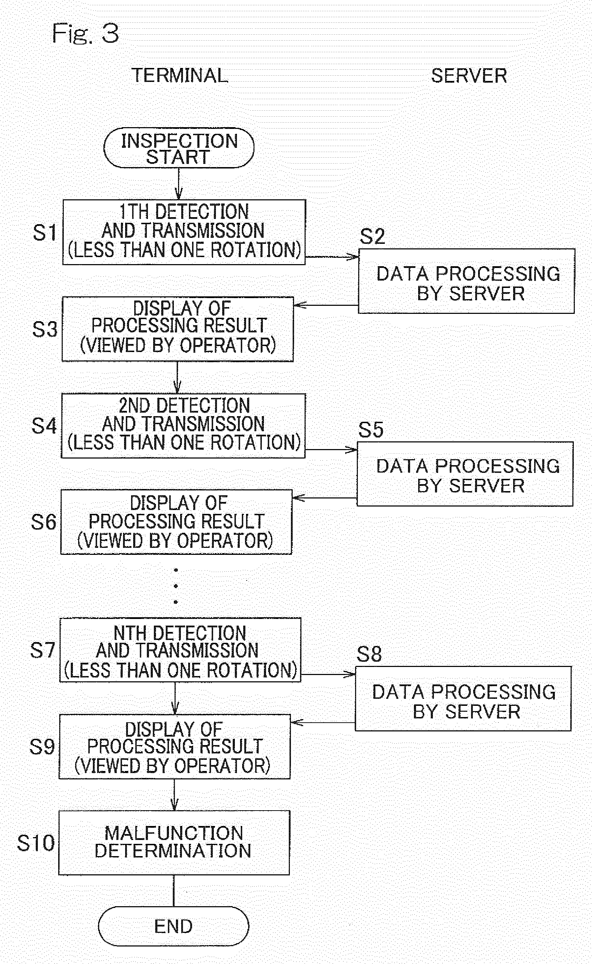

The detection data that is detected by the dedicated sensor 3 for a time period of less than one rotation of the rotating machine component 1 to be transmitted. Thus, as shown in Fig. 3, the following process is repeated a plurality of times, for example, several times (3 to 6 times). In each of the process, detection is performed by the dedicated sensor 3 and a detection signal is transmitted to the portable information terminal 2 (S1 (S4, S7)), processing of malfunction determination and the like is performed by the server 6 and the processing result is transmitted to the portable information terminal 2 (S2 (S5, S8)), and the result is displayed by the portable information terminal 2, so that an operator can view the displayed result (S3 (S6, S9)). The processing of malfunction determination and the like (S2 (S5, S8)) by the server 6 is performed on the detection data at one time transmitted from the portable information terminal 2, and the malfunction determination and the like are not performed for a part for which data is not detected, among the entire periphery of the rotating machine component 1 in a circumferential direction that is a rotation direction of the rotating machine component 1.

Thereafter, the operator performs determination as to a malfunction in the rotating machine component 1 on the basis of the processing result at each time in the process repeated the plurality of times (S10). For example, in a malfunction determination result displayed by "A" and "B", both indicating "succeed" and "fail", respectively, for each part of the rotating machine component 1 (each of the inner ring, the outer ring, the rolling element, and the retainer), if a result of "B" indicating a malfunction is present even at one time, it can be determined that a malfunction has occurred in the rotating machine component 1.

According to the method according to this embodiment, since the processing on the detection data is performed by the server 6, it is necessary to transmit the detection data from the portable terminal 2 to the server 6. However, since the server 6 normally has a function of processing at an extremely high speed as compared to the portable terminal 2, the processing for malfunction determination on the detection data can be performed at a high speed by using the function of processing at a high speed, and advanced processing can be performed to allow detailed diagnosis to be performed with high accuracy.

If signal waveform data that is so-called raw data were transmitted to the server 6, the data volume of the detection data to be transmitted would be large, so that there would occur the above communication failure. According to the method according to this embodiment, the detection time period in which the detection is performed by the dedicated sensor 3 and a block of data is transmitted at one time, that is, a time period in which measurement for inspection is continued, is less than one rotation period of the rotating machine component 1 that is an inspection target. Thus, the volume of the block of data is reduced. In particular, in inspection in which the volume of a block of data of vibration detection are large, the data volume is significantly reduced, so that each time period of transmission can be shortened. Therefore, a possibility is reduced that transmission is suspended due to a communication failure such as radio wave interference during the transmission, or detection data is damaged due to noise being superposed thereon. Since the inspection time period is less than one rotation, inspection of the entire periphery of the rotating machine component 1 in the circumferential direction that is the rotation direction of the rotating machine component 1 cannot be performed by inspection at one time. However, the inspection process including detection by the dedicated sensor 3, the data processing by the server 6, transmission of the processing result, and display on the screen 21 a of the portable information terminal 2, is repeated a plurality of times. When the operator may perform malfunction determination on the rotating machine component 1 on the basis of information displayed on the screen 21a of the portable information terminal 2 at the plurality of times, inspection of the entire periphery can be generally performed.

Even if a range in the entire periphery of the rotating machine component 1 for which range detection is performed is not configured for detection at each time, since detection is performed a plurality of times, for example, several times, detection data for the entire periphery of the rotating machine component 1 can be obtained, so that inspection of the entire periphery can be generally performed. Note that in this case, there is a portion of the periphery that can be inspected more than once. Therefore, even when a malfunction has occurred in a part of the entire periphery of the rotating machine component 1, inspection of malfunction determination can be performed. The operator may aurally feel a malfunction in the rotating machine component 1, but, with detection at several times, occurrence of the malfunction may not be displayed on the screen 21 a of the portable information terminal 2. In such a case, there is a possibility that a malfunction part of the entire periphery has not been inspected. Even so, it is only necessary to increase the number of times of repetition of detection. Accordingly, the malfunction part is inspected, the malfunction is detected, and occurrence of the malfunction is displayed on the screen 21a.

Although the data processing is performed by the server 6 as described above, a processing result obtained by data processing with the data processing software 4 may be stored in the portable information terminal 2, and the portable information terminal 2 may compare a plurality of processing results. The comparison of the processing results is performed by the terminal processing software 33.

In addition, although the data processing is performed by the server 6 as described above, numerical data may be obtained as a processing result obtained by the data processing; if the numerical data exceeds a threshold determined for each model number, or if a condition determined on the basis of comparison of time-sequential processing results is met even when the numerical data is equal to or less than the threshold, it may be determined that a malfunction has occurred, and the determination result may be displayed on the screen of the portable information terminal 2 by the processing result display module 36 or the like.

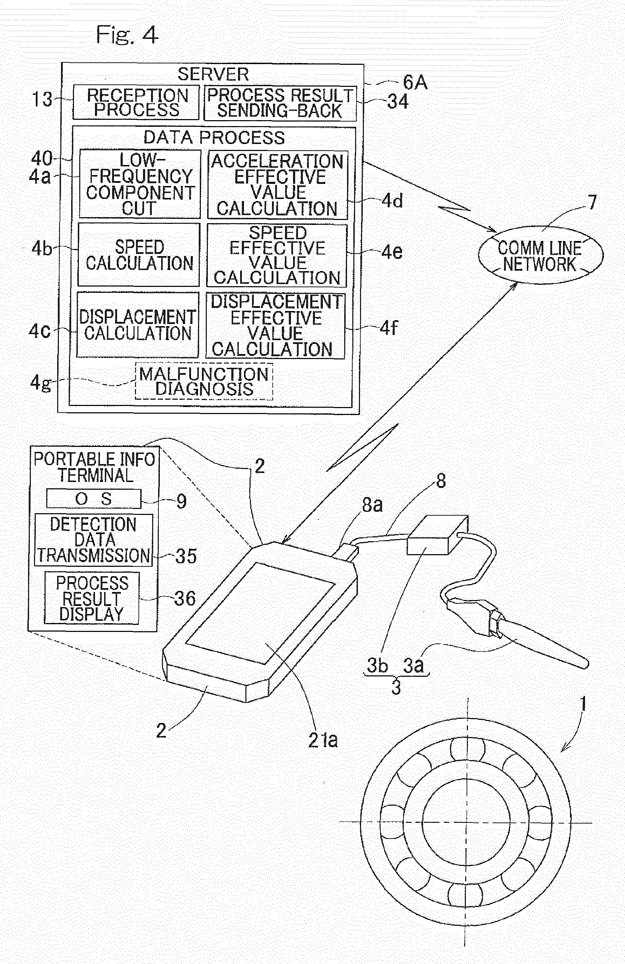

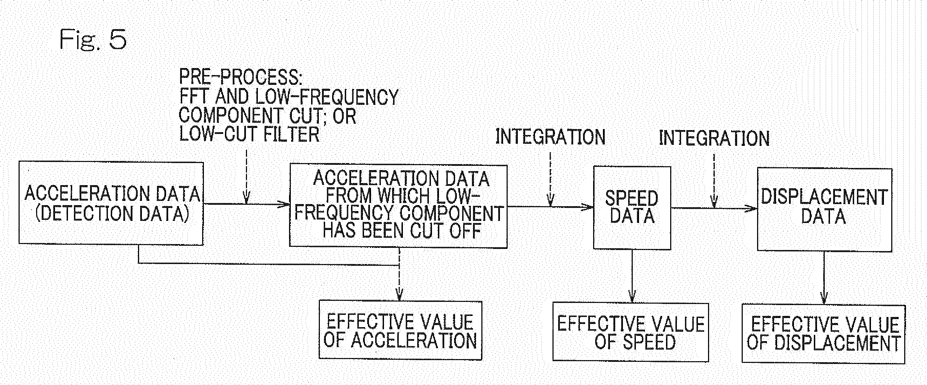

Next, a portable-terminal-using inspection method according to a second embodiment of the present invention will be described with reference to Figs. 4 and 5. In the present embodiment, components common to those in the first embodiment are designated by the same reference numerals, and the description thereof is omitted. A portable-terminal-using vibration inspection system of the present embodiment is configured to inspect an inspection target 1 such as a rotating machine component, and includes: a general-purpose portable information terminal 2; a vibration sensor 3 that detects vibration of the inspection target 1 and inputs, to the portable information terminal 2, acceleration data that is detected data; and a server 6A connected to the portable information terminal 2 via a communication line network 7 such as the Internet. The inspection target 1 is a machine component including a rolling element such as a rolling bearing, a constant velocity ball joint, or the like.

As described in connection with the first embodiment, the portable information terminal 2 is a smartphone, a tablet, or the like, and may not necessarily have a telephone function, but is an information processing apparatus that is connectable to the server 6A via a wide-area communication line network 7 such as a telephone network, the Internet, or the like and has: an OS (operation program) 9 that is able to download and install an application program; and a screen display device 21 that displays an image, such as a liquid crystal display device. In the above definition of the portable information terminal 2, the smartphone refers to a portable information terminal having a telephone function. The communication line network 7 includes a line network through which mobile communication can be performed.

The portable information terminal 2 includes: a detection data transmission module 35 that transmits, to the server, detection data including acceleration data detected by the vibration sensor 3; and a processing result display module 36 that displays a processing result sent back from the server 6A for the transmitted detection data, on the screen display device 21.

In Fig. 4, the vibration sensor 3 is configured to detect acceleration of vibration, and includes: a sensor body 3a including a vibration pickup; and an A/D converter 3b. Acceleration data indicating a vibration waveform of an analog signal that is detected by the sensor body 3a and outputted as a voltage value is converted to digital data by the A/D converter 3b, and captured in the portable information terminal 2. The A/D converter 3b may be located within a housing in which the sensor body 3a is provided. The vibration sensor 3 is insertion-connected to the portable information terminal 2 via a cable 8 having a terminal 8a that complies with the standard of a micro USB (one of the USB standards which are connection interface standards) or the like. Alternatively, the vibration sensor 3 may be connected to the portable information terminal 2 via a wireless LAN or the like, or may allow an attachable/detachable storage medium (not shown) such as a memory chip, a USB memory, or the like to be attached thereto and detached therefrom and may be able to supply data to the portable information terminal 2 via the storage medium.

The server 6A includes: a reception processing module 13 configured to receive the acceleration data transmitted from the portable information terminal 2 as a detection data; a data processing module 40 configured to process the received detection data; and a processing result sending-back module 34 configured to send a result of the processing with the data processing module 40, back to the portable information terminal 2. The data processing module 40 is implemented by a piece of data processing software.

The data processing module 40 includes: a speed calculation section 4b configured to integrate the acceleration data, which is detected as the detection data so as to obtain a speed; and a displacement calculation section 4c configured to integrate the speed obtained by the speed calculation section 4b, to obtain a displacement. The data processing module 40 also includes, at a stage prior to the speed calculation section 4b, a low-frequency component cutting section 4a configured to cut off a low-frequency component from the acceleration data which is detected as the detection data. In addition, the data processing module 40 includes an acceleration effective value calculation section 4d, a speed effective value calculation section 4e, and a displacement effective value calculation section 4f. The data processing module 40 may further include, at a stage subsequent to the displacement calculation section 4c, a malfunction diagnosis section 4g configured to diagnose a malfunction in the inspection target 1. The malfunction diagnosis section 4g can be dispensed with.

The low-frequency component cutting section 4a is configured to perform, for example, frequency analysis of the acceleration data, to eliminate a low-frequency component from a result of the frequency analysis, and to convert the low-frequency eliminated frequency analysis result into second time-based acceleration data.

The low-frequency component cutting section 4a may be a low-cut filter.

The acceleration effective value calculation section 4d calculates an effective value (also referred to as root mean square (RMS) value) of a vibration waveform of acceleration from the acceleration data which is detected as the detection data. The acceleration data used in the calculation may be data at a stage prior to the low-frequency component cutting section 4a, or may be data at a stage subsequent to the low-frequency component cutting section 4a from which data a low-frequency component has been cut off.

The speed effective value calculation section 4e calculates an effective value of a vibration waveform of the speed calculated by the speed calculation section 4b. The displacement effective value calculation section 4f calculates an effective value of a vibration waveform of the displacement calculated by the displacement calculation section 4c.

Specifically, the processing result sending-back module 34 sends the speed, the displacement, the acceleration effective value, the speed effective value, and the displacement effective value, which are obtained by the data processing module 40 as described above, back to the portable information terminal 2. In the case where the malfunction diagnosis section 4g is provided, the processing result sending-back module 34 also sends a result of diagnosis by the malfunction diagnosis section 4g, back to the portable information terminal 2.

Vibration inspection using the inspection system having this configuration will be described. The vibration sensor 3 is connected to the portable information terminal 2, and acceleration of the inspection target 1 is measured by the vibration sensor 3. The obtained detection data of the acceleration is transmitted from the portable information terminal 2 to the server 6A.

In the server 6A, the received detection data of the acceleration is processed by the data processing module 40 as shown in Fig. 5. That is, a low-frequency component is cut off from the acceleration data, which is detected as the detection data, by the low-frequency component cutting section 4a (see Fig. 4). The acceleration data from which the low-frequency component has been cut off is integrated, whereby speed data is obtained. The obtained speed data is further integrated, whereby displacement data is obtained. In this case, since the low-frequency component has been cut off from the acceleration data, the integration for the speed and the displacement is performed from the acceleration, calculation can be performed without occurrence of divergence. Therefore, calculation of the speed and the displacement can be assuredly performed.

The low-frequency component cutting section 4a cuts off a low-frequency component by using a low-cut filter or frequency analysis. In the case with a low-cut filter, the low-frequency component cutting section only needs to be configured with a simple configuration. In the case where the low-frequency component cutting section 4a is configured to perform frequency analysis of the acceleration data, to eliminate a low-frequency component from a result of the frequency analysis, and to convert the low-frequency-eliminated frequency analysis result into second time-based acceleration data. The low-frequency component can be assuredly and appropriately cut off.

As described above, according to the inspection system having the above configuration, the server 6A includes the speed calculation section 4b and the displacement calculation section 4c that integrates the speed obtained by the speed calculation section 4b, to obtain a displacement. Thus, the speed and the displacement can be obtained by using a piece of software stored in the server 6A, without using a vibration sensor having a dedicated IC.

As described above, the general-purpose portable information terminal 2 is used to read detection data of the vibration sensor 3 and to transmit the detection data to the server 6A for causing the server 6A to process the detection data, and is also used to display a processing result transmitted from the server 6A. Thus, by merely preparing the dedicated sensor 3, it is possible to obtain the speed and the displacement of vibration by using the popularized portable information terminal 2 such as a smartphone, a tablet, or the like.

Since the processing result sending-back module 34 of the server 6A sends the speed and the displacement of vibration obtained by the data processing module 40, back to the portable information terminal 2, it is possible to obtain not only the acceleration of vibration but also the speed and the displacement of vibration at the site of vibration measurement, by connecting the portable information terminal 2 while using the vibration sensor 3 having no IC dedicated for calculation, similarly to the case of using a vibration sensor that has a dedicated IC.

In the case of this embodiment, in addition to these, the server 6A also calculates the effective value of the acceleration of vibration, the effective value of the speed of vibration, and the effective value of the displacement of vibration and transmits these effective values to the portable information terminal 2. Thus, by using the portable information terminal 2 and the vibration sensor 3 that detects only the acceleration of vibration, it is possible to obtain various data to be used for diagnosis of the inspection target such as a rotating machine component, and apply the various data to malfunction diagnosis with high accuracy.

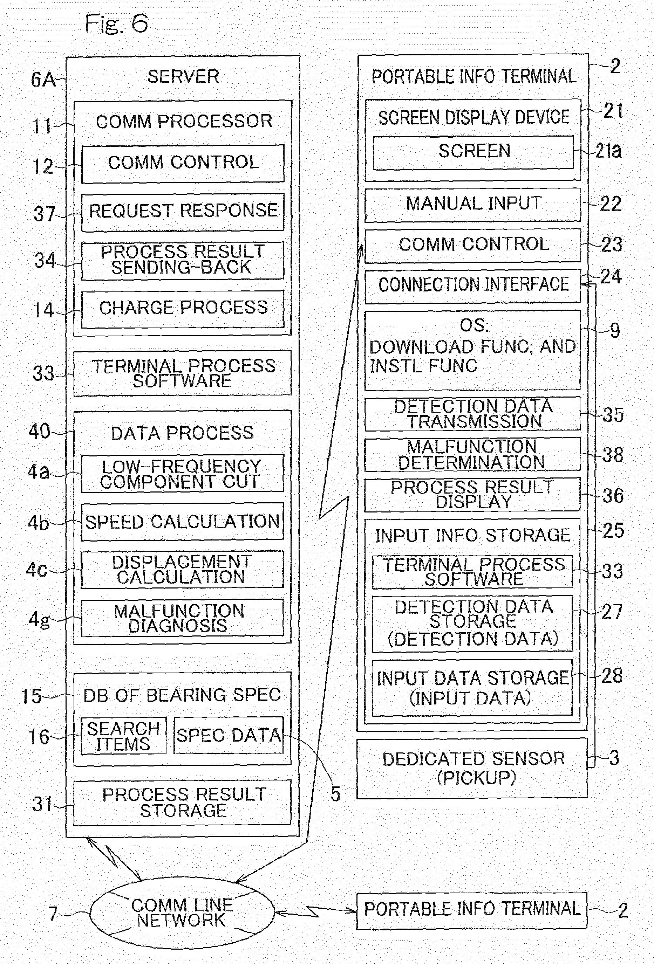

Fig. 6 shows a portable-terminal-using inspection vibration system according to a third embodiment of the present invention. This embodiment is the same as the configuration described in the first embodiment or the second embodiment, except for configuration to be described in particular. Therefore, components common to those in the first embodiment or the second embodiment are designated by the same reference numerals, and the description thereof is omitted.

In this embodiment, the server 6A includes: a communication processor 11; a storage (not shown) having stored therein a piece of data processing software implementing the data processing module 40; a storage (not shown) having stored therein a piece of terminal processing software 33; a database 16 for the specifications of the inspection target 1 such as a bearing; and a processing result storage 31. In the following description, the data processing module 40 may be described as the piece of data processing software. In addition, the sensor 3 corresponds to the dedicated sensor described in the first embodiment, but is limited to a vibration sensor 3 in the present embodiment. Furthermore, the first embodiment relates to an inspection system for a rotating machine component 1, but the present embodiment relates to an inspection system for an inspection target 1 that is not limited to a rotating machine component.

The communication processor 11 includes the communication control module 12, the request response module 37, the processing result sending-back module 34, and the charging processing module 14 which have been described in the first embodiment.

The data processing module 40 corresponds to the data processing module 40 described in the second embodiment described with reference to Fig. 4, but the effective value calculation sections are not shown in Fig. 6.

The malfunction diagnosis section 4g of the data processing module 40 performs processing related to diagnosis of a malfunction as described as the function of the data processing software in the first embodiment.

An inspection method according to the third embodiment corresponds to the same as the inspection method according to the first embodiment, but does not have, as a requirement, a configuration in which a detection time period is less than one rotation, transmission to the server 6 is executed per detection data at one time, and the detection and the transmission are repeated, the configuration being a requirement in the inspection method according to the first embodiment. However, the above configuration may be incorporated into the third embodiment.

In the inspection method according to the third embodiment, when the server 6A sends the processing result back to the portable information terminal 2 by the processing result sending-back module 34, the server 6A sends the speed, the displacement, the acceleration effective value, the speed effective value, and the displacement effective value obtained by the data processing module 40, back to the portable information terminal 2.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

### [Reference Numerals]

- 1 ····: rotating machine component
- 2 ····: portable information terminal
- 3 ····: dedicated sensor
- 4 ····: data processing software
- 5 ····: pieces of specification data
- 6 ····: server
- 7 ····: communication line network
- 21a ····: screen

## Claims

1. A portable-terminal-using inspection system for inspecting a rotating machine component, the system comprising:
a dedicated sensor configured to detect a state of the rotating machine component;
at least one general-purpose portable information terminal to which detection data regarding the state detected by the dedicated sensor is supplied; and
a server connected to the at least one portable information terminal via a communication line network, wherein
the at least one portable information terminal is configured to transmit the detection data supplied from the dedicated sensor, to the server, and display, on a screen, a processing result that is obtained by data processing with the server and transmitted from the server,
a detection time period during which the detection data supplied by the dedicated sensor has been detected at one time is less than one rotation period of the rotating machine component that is a detection target, the detection data which has been detected at one time being transmitted to the server at one time,
the server includes a piece of data processing software and a database having stored therein pieces of specification data each associated with a respective model number of the rotating machine component, and the piece of data processing software has a procedure of performing data processing by using the pieces of specification data and the detection data transmitted from the at least one portable information terminal, and transmitting the processing result to the at least one portable information terminal, and
the transmission of the detection data to the server by the at least one portable information terminal, and the data processing and the transmission of the processing result to the at least one portable information terminal by the server are repeated a plurality of times.

2. The portable-terminal-using inspection system as claimed in claim 1, wherein
the dedicated sensor includes a sensor for detecting vibration or sound, and the detection data includes waveform data,
the server is configured to perform frequency analysis of the waveform data and transmits, to the at least one portable information terminal, a result of presence/absence of a malfunction in each part of the rotating machine component, and
the at least one portable information terminal is configured to display the result of presence/absence of a malfunction in each part, on the screen.

3. The portable-terminal-using inspection system as claimed in claim 1 or 2, wherein the rotating machine component includes a rolling bearing.

4. The portable-terminal-using inspection system as claimed in any one of claims 1 to 3, wherein the detection time period is equal to or less than 1/4 of one rotation period of the rotating machine component.

5. The portable-terminal-using inspection system as claimed in any one of claims 1 to 3, wherein a time obtained by multiplying the detection time period by the plurality of times is larger than one rotation period of the rotating machine component.

6. An inspection method for inspecting a rotating machine component by using a general-purpose portable information terminal, the inspection method comprising:
(i) detecting a state of the rotating machine component by a dedicated sensor;
(ii) supplying detection data regarding the detected state from the dedicated sensor to the portable information terminal, a detection time period during which the detection data supplied by the dedicated sensor has been detected at one time being less than one rotation period of the rotating machine component that is an inspection target;
(iii) transmitting the detection data supplied to the portable information terminal, which has been detected at one time, from the portable information terminal to the server at one time;
(iv) performing data processing with a piece of data processing software stored in the server, using the detection data and pieces of specification data each associated with a respective model number of the rotating machine component;
(v) transmitting a processing result that is a result of the data processing, from the server to the portable information terminal; and
(vi) displaying the processing result on a screen of the portable information terminal, wherein
the above-mentioned (i) to (vi) are repeated a plurality of times, which allows an operator to perform malfunction determination at one time on the rotating machine component on the basis of a plurality of processing results that have been displayed on the screen of the portable information terminal.

7. The inspection method as claimed in claim 6, wherein
the dedicated sensor includes a sensor for detecting vibration or sound, and the detection data includes waveform data,
the above-mentioned (iv) includes performing frequency analysis of the waveform data,
the above-mentioned (v) includes transmitting a result of presence/absence of a malfunction in each part of the rotating machine component, as the processing result, to the portable information terminal, and
the above-mentioned (vi) includes displaying, by the portable information terminal, the result of presence/absence of a malfunction in each part, on the screen.

8. The inspection method as claimed in claim 6 or 7, wherein the rotating machine component includes a rolling bearing.

9. A portable-terminal-using inspection vibration system for inspecting an inspection target, the system comprising:
a vibration sensor configured to detect acceleration of vibration of the inspection target;
at least one general-purpose portable information terminal to which acceleration data regarding the acceleration detected by the vibration sensor is supplied; and
a server connected to the at least one portable information terminal via a communication line network, wherein
the at least one portable information terminal includes:
a detection data transmission module configured to transmit detection data including the acceleration data detected by the vibration sensor, to the server; and
a processing result display module configured to display a processing result sent back from the server with respect to the transmitted detection data,
the server includes:
a reception processing module configured to receive the acceleration data included in the detection data transmitted from the at least one portable information terminal;
a data processing module configured to process the received detection data; and
a processing result sending-back module configured to send a processing result of the data processing module back to the at least one portable information terminal, and
the data processing module includes:
a speed calculation section configured to integrate the acceleration data in the detection data, to obtain a speed; and
a displacement calculation section configured to integrate the speed obtained by the speed calculation section, to obtain a displacement.

10. The portable-terminal-using inspection vibration system as claimed in claim 9, wherein the data processing module of the server includes, at a stage prior to the speed calculation section, a low-frequency component cutting section configured to cut off a low-frequency component from the acceleration data in the detection data.

11. The portable-terminal-using inspection vibration system as claimed in claim 10, wherein the low-frequency component cutting section is configured to perform frequency analysis of the acceleration data in the detection data, to eliminate a low-frequency component from a result of the frequency analysis, and to convert the low-frequency-eliminated frequency analysis result into second time-based acceleration data.

12. The portable-terminal-using inspection vibration system as claimed in any one of claims 9 to 11, wherein
the data processing module of the server includes at least one of: an acceleration effective value calculation section configured to calculate an effective value of the acceleration from the acceleration data; a speed effective value calculation section configured to calculate an effective value of the speed from the speed obtained by the speed calculation section; and a displacement effective value calculation section configured to calculate an effective value of the displacement from the displacement obtained by the displacement calculation section, and
the processing result sending-back module sends any one effective value among the effective values calculated by the acceleration effective value calculation section, the speed effective value calculation section and the displacement effective value calculation section, respectively, the speed obtained by the speed calculation section, and the displacement obtained by the displacement calculation section, as the processing result, back to the at least one portable information terminal.

13. The portable-terminal-using inspection vibration system as claimed in any one of claims 9 to 12, wherein the inspection target includes a rotating machine component.

14. The server included in the portable-terminal-using vibration inspection system as claimed in any one of claims 9 to 13.
